# EUROPÄISCHE PATENTANMELDUNG

(11) **EP 0 875 726 A2**
(43) Veröffentlichungstag der Anmeldung: **04.11.1998**
(21) Anmeldenummer: 98107712.6
(22) Anmeldetag: 28.04.1998
(51) Int. Cl.: F28F 21/04, F28F 19/02

(54) **Wärmetauscher für Einsatzbereiche bei Temperaturen grösser 200 C bis 1.600 C und/oder korrosiven Medien**

(30) Priorität: 29.04.1997 DE 19717931
(71) Anmelder: ECM Ingenieur-Unternehmen für Energie-und Umwelttechnik GmbH, 81539 München (DE); IABG Industrieanlagen-Betriebsgesellschaft mbH, 85521 Ottobrunn (DE)
(72) Erfinder: Ködel, Matthias, 85521 Ottobrunn (DE); Papenburg, Ulrich, 85659 Egmating (DE)

(57) **Zusammenfassung**

Die Erfindung betrifft Wärmetauscher für den Einsatz bei Temperaturen größer 200 - 1600 °C und/oder korrosiven Medien, insbesondere oxidierenden Säuren.

Aufgabe der Erfindung ist es, den energetischen Wirkungsgrad von thermischen Verbrennungsprozessen im Hinblick auf die Wärmenutzung erheblich zu verbessern und gleichzeitig die Baugröße der Apparate stark zu verringern. Dies wirkt sich auf die Investitions- und Betriebskosten einer derartigen Anlage positiv aus.

Zum anderen ist der Einsatz von Wärmetauschern auch bei niedrigeren Temperaturen in korrosiven Medien, insbesondere oxidierenden Säuren möglich.

Gemäß der Erfindung wird dies dadurch erreicht, daß die Wärmetauscher aus faserverstärkter Keramik (C/SiC oder SiC/SiC) bestehen, und die Einzelbauteile keramisch miteinander verbunden oder mit einem Keramikkleber gefügt sind.

Die Geometrie sowohl der Einzeilbauteile als auch des Gesamtapparates kann auf die entsprechenden Prozess- und/oder Umgebungsbedingung exakt angepaßt werden.

Anwendungsgebiet der Erfindung ist der Apparatebau für sämtlich Wärmeaustauschprozesse bei Temperaturen größer 200 - 1600 °C und/oder korrosiven Umgebungsbedingungen.

## Beschreibung

Die Erfindung betrifft Wärmetauscher aus faserverstärkter Keramik jeglicher Bauart (z.B. Rohrbündel-, Plattenwärmetauscher, Rippenrekuperatoren) für den Einsatz bei Temperaturen vom 200 - 1600 °C und/oder korrosiven Medien insbesondere oxidierenden Säuren.

Bei den bisher bekannten Wärmetauschern ist die Einsatztemperatur auf ca. 800 °C begrenzt, wobei dabei der Wirkungsgrad aufgrund von wassergekühlten Systemen entsprechend niedrig ist bzw. entsprechend große Austauschflächen notwendig sind. Des weiteren ist der Einsatz von Wärmetauschern in korrosiven oxidierenden Medien bei Temperaturen über 200°C nicht möglich gewesen.

Hintergrund für die Entwicklung von HT-Wärmetauschern ist einerseits die Errichtung von kleinen thermischen Verbrennungsanlagen mit einem minimalen Apparate- und Kostenaufwand bei gleichzeitigem maximalen energetischen Wirkungsgrad, als auch der Einsatz von Wärmetauschern in der chemischen Industrie.

Die entscheidenden Vorteile des erfindungsgemäßen HT-Wärmetauschers aus faserverstärkter Keramik (C/SiC: Kohlenstoffaserverstärktes Siliciumcarbid, C/C: Kohlenstoffaserverstärktes Kohlenstoff, SiC/SiC: Siliciumcarbidfaserverstärktes Siliciumcarbid)

sind u. a.:
- Hochtemperaturbeständigkeit und HT-Festigkeit bis 1600 °C an Luft und bis 2000 °C in sauerstoffarmer Atmosphäre
- Chemische Beständigkeit auch bei hohen Temperaturen gegenüber chemisch aggressiven Medien ( alle Säuren und Laugen etc.)
- Der keramische Werkstoff ist gas- und flüssigdicht
- Hohe Wärmeleitfähigkeit und damit verbunden eine ausgezeichnete Temperaturhomogenität
- Geringe Dichte
- niedrigere Betriebskosten durch höheren energetischen Wirkungsgrad

Darüber hinaus können die Temperatur- und die Temperaturwechselbeständigkeit, die chemische Resistenz, die Wärmeleitfähigkeit und die Festigkeit gezielt über die Auswahl der Rohstoffe (Art, Länge, Orientierung und Menge der Fasern bzw. Art und Menge der Harzbindemittel) und/oder die Art der Formgebungsprozesse (Pressen, Wickeln, Laminieren u.a.) der faserverstärkten Rohstrukturen und/oder die Quantität bzw. Qualität der thermischen Infiltrations-/Verdichtungsprozesse eingestellt werden.

Die einzelnen Wärmetauscherelemente wie Rohre, Kopfplatten etc. werden im 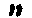 Grünzustand" in relativ kleinen Einzelbauteilen gefertigt und erst anschließend zu dem endgültigen Baute keramisch verbunden und/oder geklebt, so daß eine monolithische Struktur entsteht. Diese Verarbeitungsmethode ermöglicht auch eine Minmierung bei den Herstellungskosten. Es ist aber auch bei sehr komplexen Bauteilen möglich, die keramischen Einzelbauteile nach der Infiltration zu dem endgültigen Gesamtbauteil mit einem Keramikkleber zu verbinden. Aufgrund dieser Fertigungsmethode ist es sichergestellt, daß die Wärmetauscher an den Fügestellen dicht sind.

Durch diese gas- und flüssigkeitsdichte Fügetechnik mit dem Keramikkleber ist es möglich, z.B. einzelne defekte Rohre eines Rohrbündelwärmetauschers auszutauschen, ohne das gesamte Rohrbündel demontieren zu müssen. Dies senkt die Wartungskosten einzelner Apparate drastisch.

Durch die hohe Designflexibilität des Verbundwerkstoffes können nahezu alle Bauteilformen nach den Erfordernissen der Einbausituation gestaltet und gefertigt werden.

## Patentansprüche

1. Hochtemperatur-Wärmetauscher für den Einsatz bei Temperaturen von 200 - 1600 °C und/ oder in korrosiven Medien, insbesondere in oxidierenden Säuren, dadurch gekennzeichnet, daß sämtliche Einzelbauteile aus faserverstärkter Keramik (C/SiC oder SiC/SiC) hergestellt werden.

2. Hochtemperatur-Wärmetauscher nach einem der vorherigen Ansprüche, dadurch gekennzeichnet, daß der Wärmetauscher sowohl als Rohrbündel-, Plattenwärmetauscher, Flüssig/Flüssig-, Gas/Flüssig-, Gas/Gas-Wärmetauscher oder in jeder anderen beliebigen Bauform hergestellt werden kann.

3. Hochtemperatur-Wärmetauscher nach einem der vorherigen Ansprüche, dadurch gekennzeichnet, daß die Einzelbauteile keramisch miteinander verbunden werden (siliziert) und dadurch das Gesamtbauteil eine monolithische Struktur aufweist, die gas- und flüssigkeitsdicht ist.

4. Hochtemperatur-Wärmetauscher nach einem der vorherigen Ansprüche, dadurch gekennzeichnet, daß die Einzeilbauteile nach der Silizierung mit einem Keramikkleber zusammengefügt werden.

5. Hochtemperatur-Wärmetauscher nach einem der vorherigen Ansprüche, dadurch gekennzeichnet, daß die Bauform den jeweiligen Prozess- und Einbaubedingungen hinsichtlich der Gestaltung der Einzelelemente genau angepaßt werden kann.
